Europäisches Patentamt

European Patent Office

Office européen des brevets

(11) Publication number: **0 217 211**
**A2**

(12) **EUROPEAN PATENT APPLICATION**

(21) Application number: 86112699.3

(22) Date of filing: 15.09.86

(51) Int. Cl.⁴: **A47J 31/30** , A47J 31/46

(30) Priority: 23.09.85 IT 5383585 U
21.04.86 IT 5330486 U

(43) Date of publication of application:
**08.04.87 Bulletin 87/15**

(84) Designated Contracting States:
**AT BE CH DE FR GB IT LI LU NL SE**

(71) Applicant: **ESSEGIELLE S.r.l**
**Strada San Mauro 25**
**I-10156 Torino(IT)**

(72) Inventor: **Cortese, Virginio**
**Strada del Pascolo, 131**
**I-10100 Torino(IT)**

(74) Representative: **Prato, Roberto et al**
**c/o Ingg. Carlo e Mario Torta Via Viotti 9**
**I-10121 Torino(IT)**

(54) **Coffee machine.**

㉗ A coffee machine on which a boiler, heated by means of an electric heating source, presents a lower and an upper pipe designed to communicate respectively with a water outlet connected to a filter cup for containing coffee powder, and with a steam outlet. A distribution chamber with an exhaust outlet connects the lower pipe on the boiler to the water outlet; and a switch device is assembled inside the distribution chamber in such a manner as to move between at least two positions for selectively connecting the water outlet once with the exhaust outlet and once with the lower pipe.

Fig.2

Fig.5

## COFFEE MACHINE

The present invention relates to a coffee machine in general, and, in particular, to a coffee machine of the type whereby a given quantity of water inside a boiler is forced through coffee powder by virtue of the overpressure formed inside the said boiler subsequent to activation of a heating source. The coffee powder is contained inside a filter cup connected to a first outlet on the said boiler, a second outlet of which may be connected to a substantially dry steam supply nozzle.

On known coffee machines of the aforementioned type, activation of the boiler heating source results, after a given length of time, in substantially all the water inside the boiler passing through the coffee powder contained inside the filter cup, and in the production of an equivalent amount of coffee, which is collected inside a container, possibly heatable, to be served later in cups. Known machines of the aforementioned type present a number of functional drawbacks, due to the fact that sub stantially all the water in the boiler passes through the coffee powder in one go, with no possibility of interrupting percolation, other than by de-activating the heating source.

Such operation therefore results in poor quality coffee; in the need for a heated container in which to keep any left-over coffee; and in practically no possibility of producing dry steam, after producing the coffee, due to all the water in the boiler having been used up.

The aim of the present invention is to provide a coffee machine involving none of the aforementioned drawbacks; in particular, a coffee machine which, on the one hand, provides for making excellent coffee in the number of cups requested at one time by the user, and which, on the other hand, provides for retaining, inside the boiler, a sufficient volume of left-over water for producing a given volume of steam.

With this aim in view, according to the present invention, there is provided a coffee machine comprising a boiler; a heating source connected to the said boiler; a first outlet pipe on the said boiler, extending from a lower portion of the same; a second outlet pipe on the said boiler, extending from an upper portion of the same; a steam supply nozzle; and a removable filter cup for containing a sufficient volume of coffee powder for making a given number of cups of coffee; characterised by the fact that it also comprises a distributor having a distribution chamber having at least a first inlet communicating with the said first pipe, and at least a first outlet communicating with the said filter cup; switch means being housed in mobile manner inside the said chamber, which switch means are designed to assume selectively at least a first and a second operating position wherein the said first inlet is hydraulically connected and disconnected respectively to and from the said first outlet; the said boiler being of such a size as to contain a greater volume of water than that required for filling the said given number of cups.

In a preferred embodiment of the present invention, the machine as described above also comprises, for preventing the emission of water under pressure when the filter cup is removed, an exhaust and a second outlet located on the said distribution chamber and communicating with the said exhaust; the said switch means connecting the said first and the said second outlet, when the said switch means are in the said second operating position.

Control means are preferably provided for de-activating the said heating source when the said switch means are in the said third position.

According to a variation of the invention as described above, the said distribution chamber comprises a second inlet communicating with the said second pipe, and a third outlet communicating with the said nozzle; the said switch means being designed to selectively assume a third operating position wherein the said second inlet is connected to the said third outlet.

Alternatively, the said second pipe and the said nozzle communicate directly, and via the interposition of valve means, outside the the said distribution chamber.

A non-limiting embodiment of the present invention will be described by way of example, with reference to the accompanying drawings, in which:

Fig.1 shows a three-quarter top view in perspective of a coffee machine constituting a preferred embodiment of the present invention;

Fig.2 shows a partially-sectioned side view of the mechanism inside the Fig.1 machine;

Fig.3 shows an underside view of a detail in Fig.2;

Fig.4 shows an enlarged side view of the Fig.3 detail;

Fig.5 shows an enlarged plan view of the Fig.3 detail;

Fig.s 6, 7 and 8 show schematic plan views of a detail in Fig.s 4 and 5 in three distinct operating positions;

Fig.9 shows a diagram of the electric circuit controlling the Fig.1 machine;

Fig.10 shows an underside view of a variation of the Fig.3 detail;

Fig.11 shows an enlarged side view of the Fig.10 variation;

Fig.12 shows an enlarged plan view of the Fig.10 variation;

Fig.s 13 and 14 shows schematic plan views of a detail in Fig.s 11 and 12 in two distinct operating positions;

Fig.15 shows a diagram of a variation of the Fig.9 electric circuit.

Number 1 in Fig.s 1 and 2 indicates a coffee machine comprising an outer casing 2 consisting of a hollow base 3, a substantially cylindrical upright 4 extending upwards from the rear end of base 3 and closed off at the top by a wall 5 with a cap 6 on top, and an appendix 7 substantially in the form of a rectangular parallelepipedon and projecting radially outwards from one end of upright 4. From a first vertical side surface of appendix 7, there projects outwards a pipe 8 terminating with a nozzle 9 for supplying substantially dry steam; whereas, from a second vertical side surface of appendix 7, opposite the said first surface, there projects laterally outwards a control lever 10 conneted integral with a sector gear 11 located inside appendix 7 and designed to turn about an axial pin 12 on appendix 7, in such a manner as to assume, in relation to the said appendix 7, three distinct operating angles.

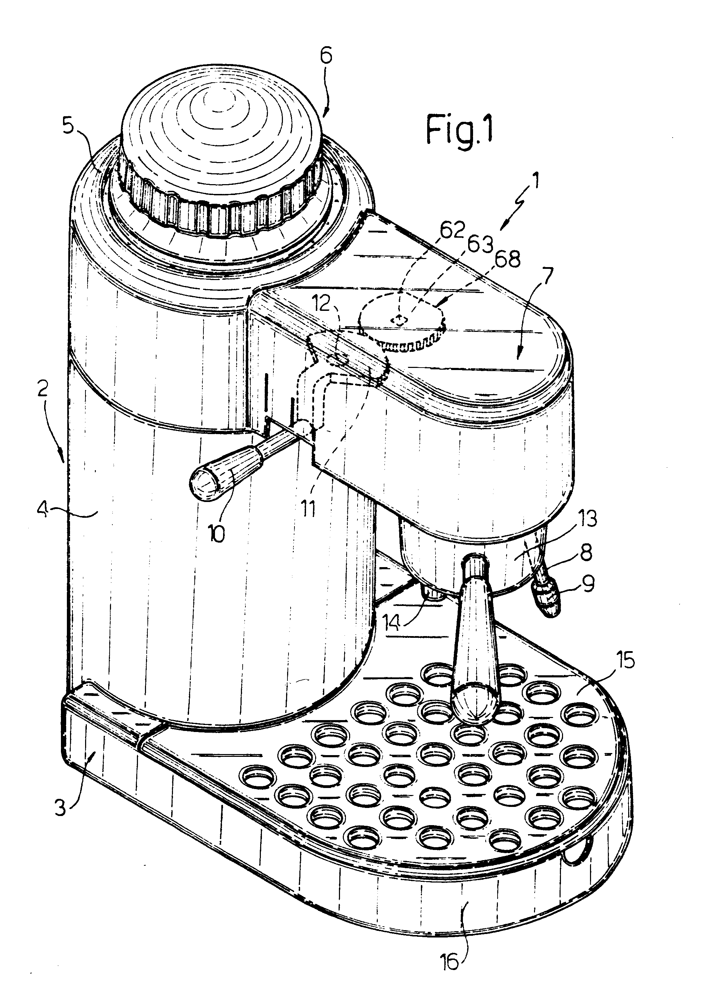

On the underside of appendix 7, there is connected, in removable manner by means of a bayonet joint described in more detail later on, a filter cup 13 designed for normally containing enough coffee powder for making two cups of coffee. Filter cup 13 is provided at the bottom with two spouts 14 (only one of which is visible in Fig.1) for feeding coffee into one or two cups (not shown) placed on top of a removable perforated wall 15 covering a compartment (not shown) formed inside a portion 16 of base 3 projecting forwards from the base of upright 4.

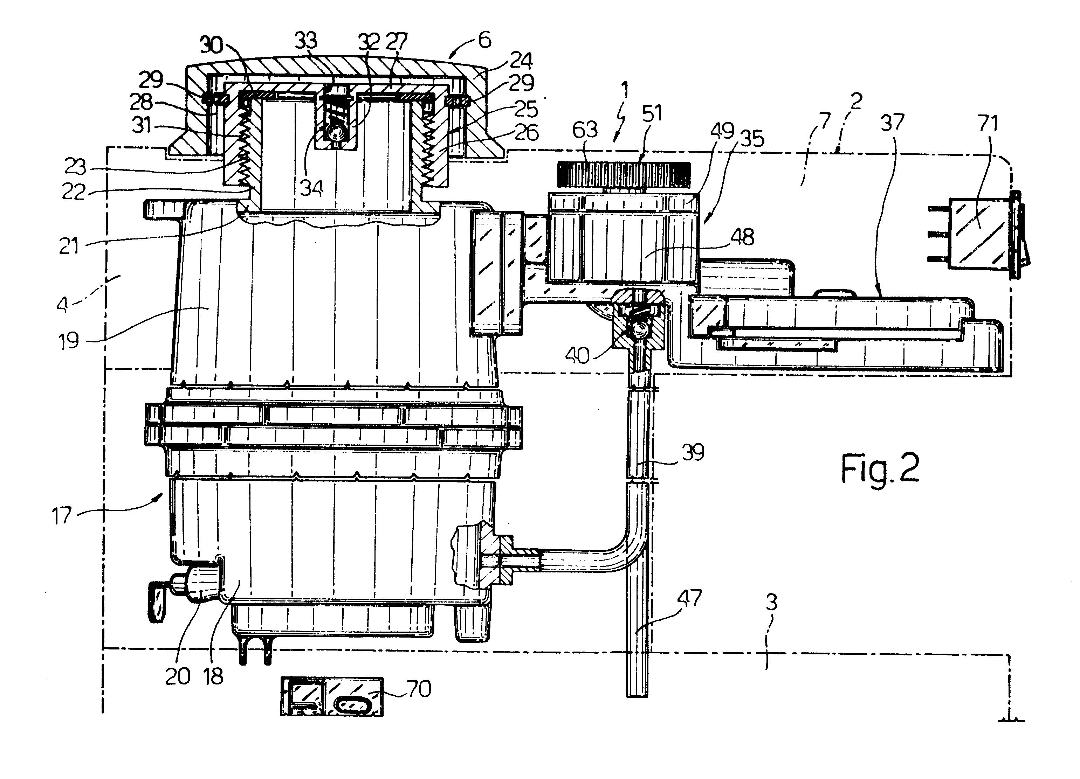

As shown in Fig.2, upright 4 houses a boiler 17 consisting of a cup-shaped lower body 18 and a cup-shaped upper body 19 connected with their concave sides facing each other. A lower wall on body 18 presents an outer groove (not shown) housing an electric resistor 20 for heating boiler 17.

From an upper wall 21 on upper body 19, there extends upwards a fill pipe 22 enabling boiler 17 to be filled with water. Fill pipe 22 projects over the top of upright 4 and presents an outer thread 23 on to which is screwed cap 6.

As shown in Fig.2, cap 6 comprises a first cup-shaped outer body 24 having its concave side facing downwards, and a second cup-shaped inner body 25 having its concave side facing downwards and housed inside body 24 with both axial and radial slack, in such a manner that, between the inner surface of body 24 and the outer surface of both cylindrical side wall 26 and end wall 27 of body 25, there is formed a continuous gap 28 communicating externally at the bottom. Gap 28 is also cup-shaped with its concave side facing downwards, and is only interrupted by a number of radial bridge elements 29 connecting body 25 to body 24.

On the inner surface of end wall 27, there is placed a seal 30 with which cooperates, in fluidtight manner, the free end of fill pipe 22 when the outer thread 23 of the same engages an inner thread 31 on the side wall 26 of cup-shaped body 25.

Wall 27 is provided with a hollow inner appendix 32 having a through axial hole 33 enabling boiler 17 to communiacte with gap 28 and controlled by a safety ball valve 34 designed to enable the steam inside boiler 17 to be blown off into gap 28 and, consequently, externally, when the pressure inside boiler 17 exceeds a given value, usually 2.5 atm.

Appendix 7 houses a distributor indicated as a whole by 35 and connected to the outer surface of upper body 19 of boiler 17.

As shown, particularly in Fig.s 3, 4 and 5, distributor 35 comprises a distribution chamber or tank 36, to which is connected a cup-shaped filter cup holder 37 having its concave side facing downwards and supporting filter cup 13. The bottom surface of chamber 36 presents a first inlet 38 communicating with the bottom end of lower body 18 of boiler 17 via an outer pipe 39 (Fig.2) and via a ball valve 40 located on pipe 39 and designed to allow water to flow from boiler 17 to chamber 36 only when the pressure inside boiler 17 exceeds a given value, usually 1.5 atm.

The bottom surface of chamber 36 also presents a second inlet 41 communicating with boiler 17 via a pipe 42 which comes out inside the top end of boiler 17; a first outlet 43 communicating with filter cup holder 37 via a water outlet pipe 44; a second outlet 45 communicating with nozzle 9 via steam outlet pipe 8; and a third exhaust outlet 46 communicating externally via an exhaust pipe 47 (Fig.2) the free end of which comes out inside the compartment (not shown) closed off by perforated wall 15. Chamber 36 is defined, at the bottom, by a circular bottom wall and, laterally, by a cylindrical wall 48. The said second inlet 41 is formed centrally through the said bottom wall, whereas the said first inlet 38 and outlets 43, 45 and 46 are formed through the said bottom wall and unevenly spaced about the same circumference coaxial with the said second inlet 41.

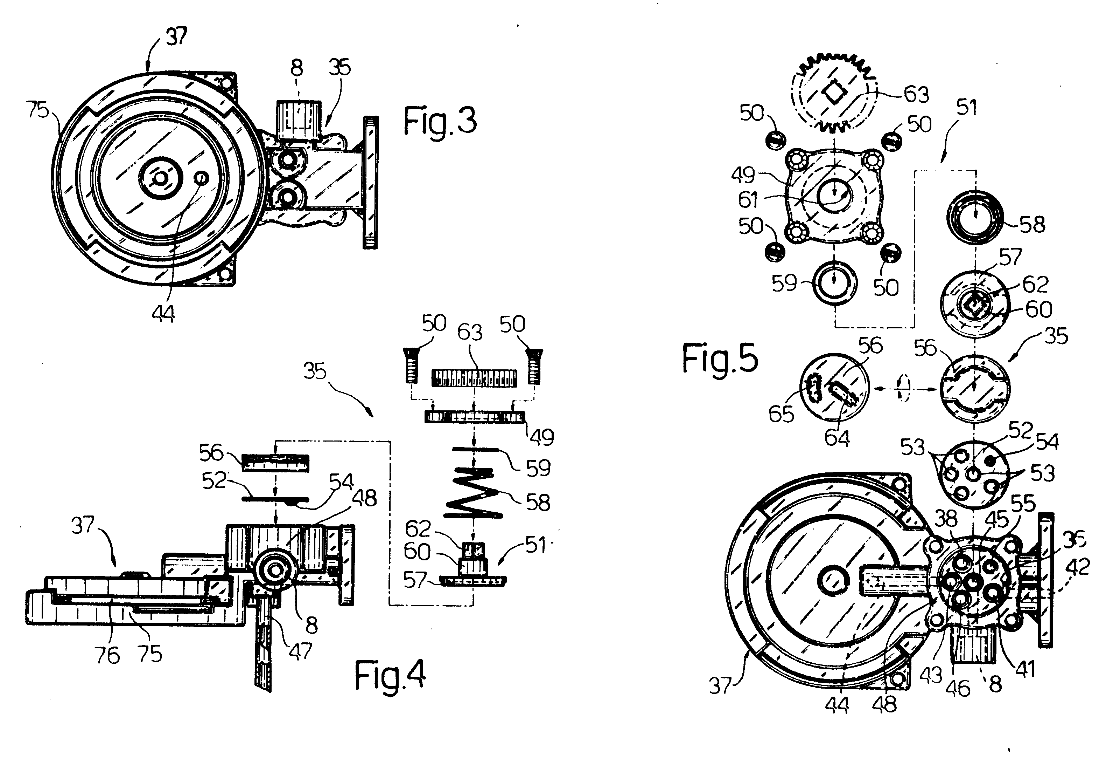

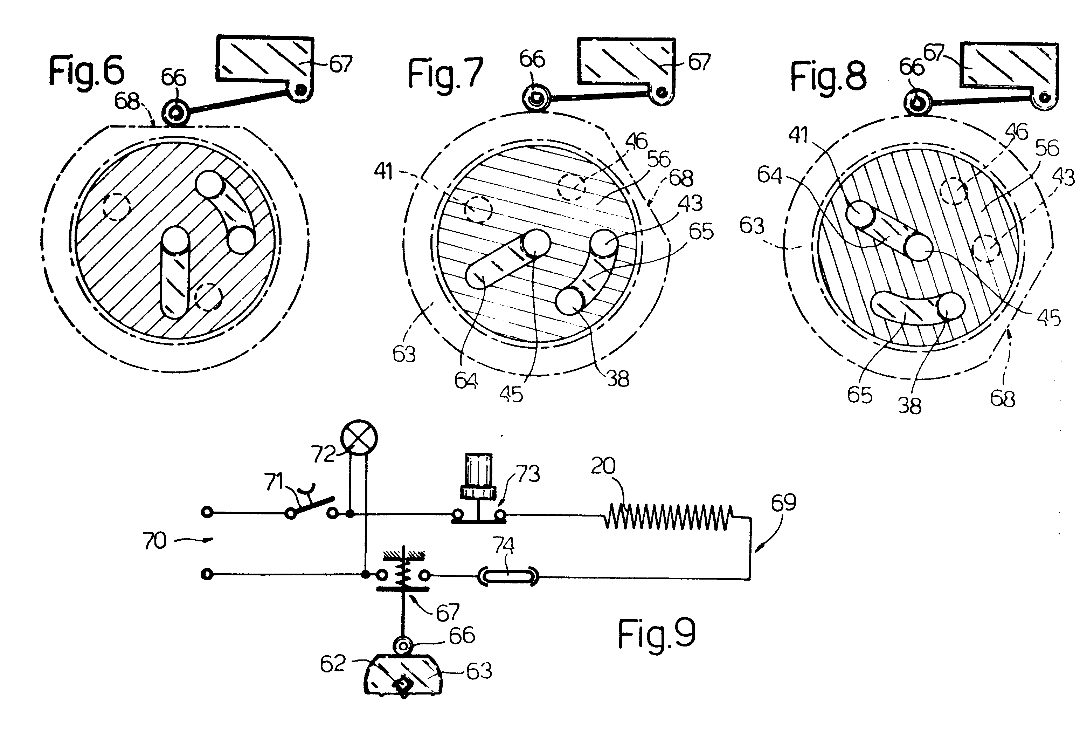

As shown in Figs. 4 and 5, chamber 36 is closed off at the top by a lid 49 secured to wall 48 by means of screws 50, and houses a switch device indicated as a whole by 51 and comprising a clearance disc 52 resting in fluid tight manner on the upper surface of the bottom wall of chamber 36. Disc 52 presents a number of holes 53 arranged matching inlets 38 and 41 and outlets 43, 44 and 45, and is secured angularly in relation to chamber 36 by means of a boss 54 engaged inside a recess 55 formed on the bottom wall of chamber 36.

Switch device 51 also comprises a switch disc 56 placed on top of clearance disc 52 and designed to turn about its own axis in contact with the upper surface of clearance disc 52. On to the upper surface of switch disc 56, there is fitted a control plate 57 held contacting switch disc 56 by means of a spring 58 pressed between plate 57 and lid 49 with a washer 59 in between. From the upper surface of plate 57, there extends upwards a pin 60 which comes out of chamber 36 through a hole 61 formed centrally in lid 49, and which presents, on its free end, a square head 62 fitted with a gear wheel 63 connected to sector gear 11.

As shown in Fig.s 5 to 8, the lower surface of switch disc 56 presents a first radial groove 64 designed to connect second inlet 41 to second outlet 45 for a given angular position of switch disc 56; and a second curved groove 65 for selectively connecting first outlet 43 to first inlet 38 and to third outlet 46, or for disconnecting first inlet 38 when the said first groove 64 connects the said second inlet 41 to the said second outlet 45.

As shown in Fig.s 6 to 8, the outer side surface of gear wheel 63 cooperates with an element 66 controlling a microswitch 67, and presents a lateral faced portion 68 which, cooperating with control element 66 with gear wheel 63 in a given angular position in relation to chamber 36, causes the said microswitch 67 to open.

Microswitch 67 forms part of an electric control circuit 69 illustrated in Fig.9 and comprising a mains socket 70; an on/off switch 71; a parallel-connected "on" indicator light 72 controlled solely by switch 71; a thermostat 73 series-connected to switch 71 and to resistor 20 for disconnecting the said resistor 20 should the temperature inside boiler 17 exceed a given maximum value, usually 120-130°C; and a temperature fuse 74 set so as to trip in the event of the temperature inside boiler 17 exceeding a critical temperature, usually 210-220°C.

As shown, particularly in Fig.4, filter cup holder 37 presents an annular, downward-facing appendix 75 designed to receive the top end of filter cup 13 and having slots 76 enabling filter cup 13 to be bayonet-connected to filter cup holder 37.

Now let's assume we wish to make two cups of coffee, which, as already stated, is normally the maximum number that can be made from the volume of coffee powder contained inside filter cup 13.

To do this, socket 70 is connected to the mains; filter cup 13 is removed from filter cup holder 37; filter cup 13 is filled with enough coffee powder for making two cups; boiler 17 is filled with water through fill pipe 22; cap 6 is screwed on; and distributor 35 is switched from the first stop or exhaust position shown in Fig.6 to the coffee-making position shown in Fig.7.

Machine 1 is now ready to operate, and may be turned on by turning on switch 71 so as to supply current to circuit 69.

With distributor 35 set to the operating position shown in Fig.7, the bottom of boiler 17 communicates with filter cup 13 via pipe 39, water inlet 38, groove 65, water outlet 43 and pipe 44. At the same time, control element 66 cooperates with the toothed surface of gear wheel 63 to as to close microswitch 67 and enable current to be supplied through resistor 20 which, as it heats up, heats the water and so raises the pressure inside boiler 17. By virtue of valve 40, the water coming out of boiler 17 along pipe 39 is prevented from reaching chamber 36 until the pressure reaches roughly 1.5 atm., at which pressure valve 40 is opened.

Once the said valve-opening pressure is reached, which pressure corresponds to a water temperature of over 100°C inside the boiler, water starts to flow through chamber 36 into filter cup 13 and, via spouts 14, into the coffee cups.

Once the required amount of coffee has been produced, the user switches lever 10 so as to set distributor 35 to the stop position shown in Fig.6.

In this position, control element 66 moves into contact with faced portion 68 so as to open microswitch 67 and de-activate resistor 20. At the same time, groove 65 is moved so as to enable communication between water outlet 43 and exhaust outlet 46 and so blow off externally the remaining pressure inside filter cup 13.

The possibility of setting distributor 35, at any time, to the stop position shown in Fig.6 provides for considerable advantages in that, in addition to enabling the user to regulate, as required, the amount of water fed through the coffee powder inside filter cup 13, and, consequently, also the quality and strength of the coffee produced, it also provides for safely removing filter cup 13 and refilling the same with fresh coffee powder for producing another two cups. This is made possible in that the volume of water inside boiler 17 is usually greater than that required for making four normal-size cups.

The volume of water inside boiler 17 is also sufficient for producing dry steam at any time, in particular, after producing four cups of coffee, by switching lever 10 so as to set distributor 35 to the operating position shown in Fig.8.

In this position, water inlet 38 is closed, and steam inlet 41 communicates with steam outlet 45 and, consequently, with pipe 8 and nozzle 9, while resistor 20 remains energized by control element 66 maintaining microswitch 67 closed.

If, during operation and due to a breakdown on thermostat 73, the pressure inside the boiler 17 should reach a critical pressure of around 2.5 atm., valve 34 opens so as to enable the steam to be blown off into gap 28, and out downwards, with no danger whatsoever to the user.

Machine 1 therefore enables the user not only to control, as required, the quality and strength of the coffee produced, but also to produce fresh coffee and/or steam at any time; unlike known coffee machines of the same type, whereby all the water inside the boiler is fed through the coffee powder in one go with no possibility of control, thus supplying the user with no more than standard, and more often than not, heated coffee.

Filter cup 13 may obviously be fitted with a known type of volume limiting device (not shown) enabling the use of sufficient coffee powder for one cup, which, in this case, is placed beneath both spouts 14.

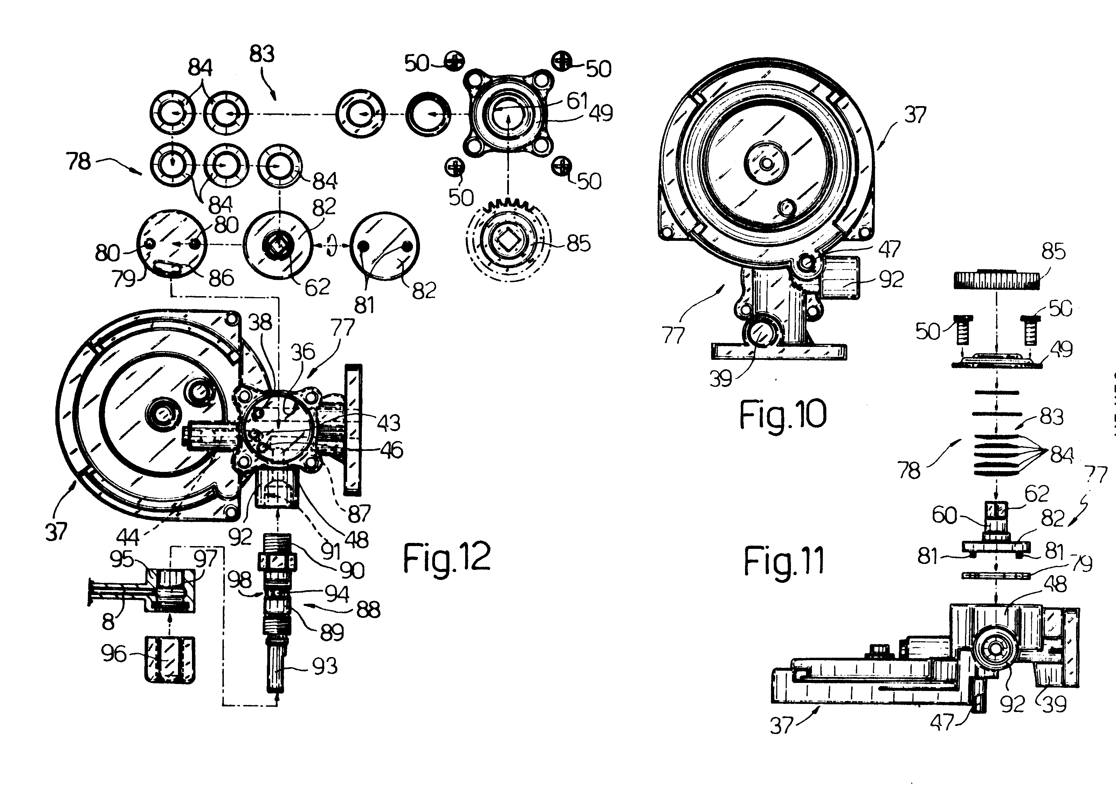

The variation shown in Fig.10 onwards relates to a distributor 77 the structure of which is substantially the same as that of distributor 35, and on which the parts common to both are shown using the same reference numbers. As shown, particularly in Figs. 10, 11 and 12, distributor 77 comprises a distribution chamber or tank 36 to which is connected filter cup holder 37. The bottom surface of chamber 36 presents an inlet 38 communicating with outer pipe 39 (Fig.2), a first outlet 43 communicating with filter cup holder 37 via water outlet pipe 44, and a second exhaust outlet 46 communicating externally via exhaust pipe 47 (Fig.2). Inlet 38 and outlets 43 and 46 are arranged successively about a circumference coaxial with wall 48.

As shown in Fig.s 11 and 12, chamber 36, which is closed off at the top by lid 49 secured by means of screws 50, houses a switch device indicated as a whole by 78 and comprising a switch disc 79 designed to turn about its own axis and contacting the upper surface of the bottom wall of chamber 36. On the upper surface of switch disc 79, there are formed two diametrically-opposed holes 80, each of which is engaged by a respective pin 81 extending axially from a control plate 82 held contacting switch disc 79 by a pack of washers 83 comprising spring washers 84 pressed between plate 82 and lid 49. As in the case of plate 57, from the upper surface of plate 82, there projects upwards a pin 60 having a square head 62 and extending outside chamber 36 through hole 61 so as to engage a gear wheel 85 similar to gear wheel 63, but having no faced portion 68.

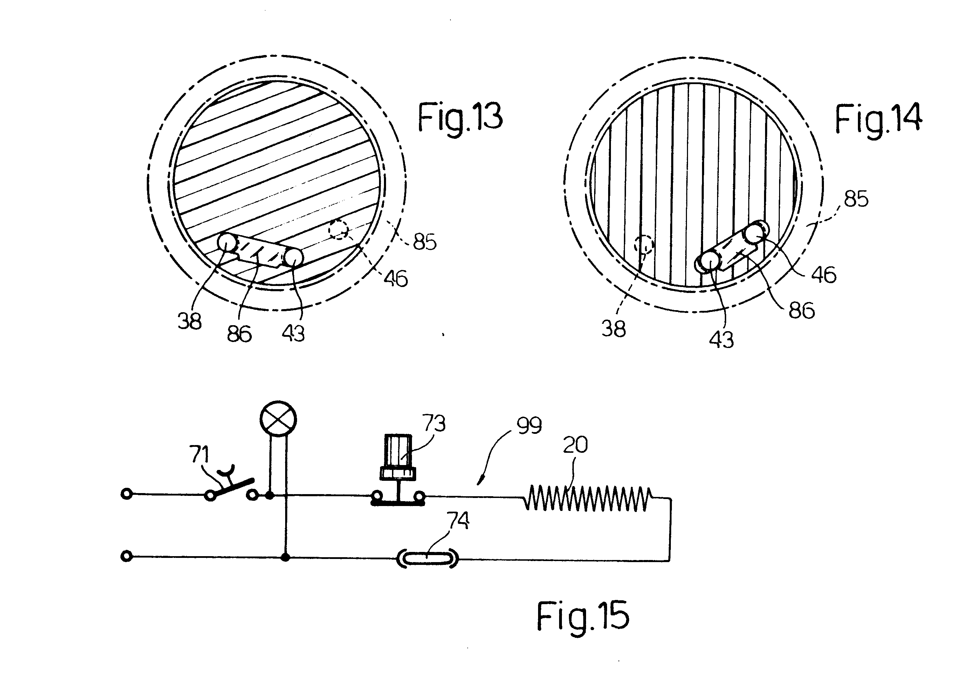

As shown in Fig.s 12 to 14, the lower surface of switch disc 79 is provided with a circumferential groove 86 which, when switch disc 79 is set to a first idle position as shown in Fig.14, enables communication between outlets 43 and 46. When, on the other hand, switch disc 79 is set to the operating position shown in Fig.13, groove 86 shifts so as to enable communication between inlet 38 and outlet 43.

As shown in Fig.12, distributor 77 presents a through pipe 87 which comes out outside chamber 36 and is connected, at one end, to the top end of boiler 17 and, at the other to pipe 8 via a needle valve 88.

Valve 88 comprises a tubular body 89 having a threaded end 90 screwed inside a threaded seat 91 on an appendix 92 of distributor 77. Tubular body 89 presents an axial pipe (not shown) communicating with pipe 87 and engaged by a pin (not shown) designed to move axially along tubular body 89 by virtue of a rotary control shaft 93 controlled externally by means of a knob (not shown) for enabling and cutting off communication between pipe 87 and a hole 94 formed radially through body 89.

Pipe 8 extends radially from a tubular connecting element 95 fitted in sealed manner on to tubular body 89 and secured to the same by means of nut 96. Element 95 presents an inner annular groove 97 facing a matching annular groove 98 formed on the outer surface of tubular body 89 and into the bottom of which the outer end of hole 94 comes out.

As shown in Fig.15, machine 1, when equipped with distributor 77, is controlled by a control circuit 99 substantially identical to circuit 69, the only difference being that it has no microswitch 67. In the case of circuit 99, resistor 20 is connected and disconnected solely by thermostat 73 when switch 71 is closed.

Using distributor 77, therefore, steam supply from nozzle 9 is no longer controlled by lever 10, but by control shaft 93, and steam and coffee may be produced simultaneously.

## Claims

1) -A coffee machine comprising a boiler; a heating source connected to the said boiler; a first outlet pipe on the said boiler, extending from a lower position of the same; a second outlet pipe on the said boiler, extending from an upper portion of the same; a steam supply nozzle; and a removable filter cup for containing a sufficient volume of coffee powder for making a given number of cups of coffee; characterised by the fact that it also comprises a distributor having a distribution chamber having at least a first inlet communicating with the said first pipe, and at least a first outlet communicating with the said filter cup; switch means being housed in mobile manner inside the said chamber, which switch means are designed to assume selectively at least a first and a second operating position wherein the said first inlet is hydraulically connected and disconnected respectively to and from the said first outlet; the said boiler being of such a size as to contain a greater volume of water than that required for filling the said given number of cups.

2) -A machine as claimed in Claim 1, characterised by the fact that it also comprises an exhaust, and a second outlet located on the said distribution chamber and communicating with the said exhaust; the said switch means, when set to the said second operating position, enabling communication between the said first and the said second outlet.

3) -A machine as claimed in Claim 1 or 2, characterised by the fact that the said distribution chamber comprises a second inlet communicating with the said second pipe, and a third outlet communicating with the said nozzle; the said switch means being designed to selectively assume a third operating position for enabling communication between the said second inlet and the said third outlet.

4) -A machine as claimed in Claim 1 or 2, characterised by the fact that the said second pipe and the said nozzle communicate directly, and via the interposition of valve means, outside the said distribution chamber.

5) -A machine as claimed in any one of the foregoing Claims, characterised by the fact that control means are provided for de-activating the said heating source when the said switch means are set to the said second position.

6) -A machine as claimed in Claim 3, characterised by the fact that it also comprises control means for de-activating the said heating source when the said switch means are set to the said second position.

7) -A machine as claimed in Claim 6, characterised by the fact that the said control means are connected directly to the said switch means.

8) -A machine as claimed in Claim 7, characterised by the fact that the said switch means comprises a distributor valve element mounted for rotation inside the said distribution chamber, a gear wheel coaxial with the said valve element and integral with the same, and external control means for selectively setting the said gear wheel in three distinct positions respectively corresponding to the said three operating positions; the said control means being connected to the said gear wheel, and cam means being supported on the said gear wheel for control ling the said control means.

9) -A machine as claimed in any one of the foregoing Claims, characterised by the fact that it comprises a first calibrated valve device located on the said first outlet pipe of the said boiler, for disabling communication between the said boiler and the said first inlet on the said distribution chamber, when the pressure inside the said first pipe is below a given value.

10) -A machine as claimed in Claim 9, characterised by the fact that the said given pressure value is approximately 1.5 atm.

11) -A machine as claimed in any one of the foregoing Claims, characterised by the fact that it comprises a second valve device located on the said boiler, for enabling external communication of the said boiler, when the pressure inside the same exceeds a given safety value.

12) -A machine as claimed in Claim 11, characterised by the fact that the said boiler comprises an upper fill pipe and a removable cap mounted in fluidtight manner on the said fill pipe, the said second valve device being supported on the said cap.

13) -A machine as claimed in Claim 12, characterised by the fact that the said cap comprises a first cup-shaped outer body having its concave side facing downwards, and a second cup-shaped inner body having its concave side facing downwards and housed inside the first with both radial and axial slack; bridge means extending between the outer surface of the said inner body and the inner surface of the said outer body for connecting the said outer and the said inner bodies together, and the said second valve device being mounted through an end wall on the said inner body facing the end wall on the said outer body.

Fig.1

Fig.2

0 217 211

Fig.3

Fig.4

Fig.5

0 217 211

Fig.6

Fig.7

Fig.8

Fig.9

0 217 211

Fig.10

Fig.11

Fig.12

Fig.13

Fig.14

85

46

38   86   43

85

46

86

38   43

71   73   99   20

74

Fig.15

0 217 211